# EUROPEAN PATENT SPECIFICATION

(11) **EP 3 864 825 B1**
(45) Date of publication and mention of the grant of the patent: **24.07.2024**
(21) Application number: 19702905.1
(22) Date of filing: 01.02.2019
(51) Int. Cl.: H04L 67/51, H04W 4/70

(54) **A METHOD FOR SUPPORTING A SERVICE OF SUBSCRIPTION AND REPORTING OF MONITORING OF EVENTS IN A TELECOMMUNICATION NETWORK AS WELL AS RELATED NETWORK FUNCTIONS**
VERFAHREN ZUR UNTERSTÜTZUNG EINES DIENSTES ZUM ABONNIEREN UND MELDEN VON EREIGNISÜBERWACHUNG IN EINEM TELEKOMMUNIKATIONSNETZWERK SOWIE ZUGEHÖRIGE NETZWERKFUNKTIONEN
PROCÉDÉ DE PRISE EN CHARGE D'UN SERVICE D'ABONNEMENT ET DE SIGNALEMENT DE LA SURVEILLANCE D'ÉVÉNEMENTS DANS UN RÉSEAU DE TÉLÉCOMMUNICATION AINSI QUE DES FONCTIONS DE RÉSEAU ASSOCIÉES

(30) Priority: 08.10.2018 EP 18382711
(43) Date of publication of application: 18.08.2021
(73) Proprietor: TELEFONAKTIEBOLAGET LM ERICSSON (PUBL), 164 83 Stockholm (SE)
(72) Inventor: RIVAS MOLINA, Ignacio, 28045 Madrid (ES); FERNANDEZ ALONSO, Susana, 28009 MADRID (ES); GARCIA AZORERO, Fuencisla, 28014 MADRID (ES)
(74) Representative: Ericsson
(86) International application number: PCT/EP2019/052540
(87) International publication number: WO 2020/074126

(56) References cited:
- "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.3.0, 17 September 2018 (2018-09-17), pages 1 - 330, XP051487017
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.3.0, 17 September 2018 (2018-09-17), pages 1 - 226, XP051487016

## Description

### Technical field

The present disclosure is related to supporting a service of subscription and reporting of monitoring of events in a telecommunication network by a Policy Control Function, PCF, and, more specifically, for services provided by the PCF for bulk subscriptions.

### Background

The Fifth Generation, 5G, telecommunications system is under standardization by the Third Generation Partnership Project, 3GPP. A disruptive change is already agreed wherein traditional peer-to-peer interfaces and protocols are modified by a so-called Service Based Architecture, SBA, comprising a plurality of Network Functions, NFs, where each NF provides one or multiple services as a producer to one or multiple consumers, by means of a protocol that is being specified in 3GPP stage 3.

For each NF, services have been defined. For example, for the User Data Management, UDM, NF the following services are defined:
- User Equipment, UE, Context Management, wherein the basic functionality is to allow a consumer NF to be registered as the serving NF for a particular User Equipment, UE.
- Subscriber Data Management, whose basic functionality is to allow a consumer NF to access to subscription data for a particular UE.
- UE Authentication, wherein the basic functionality is to allow a consumer NF to get UE authentication data.

The Network Repository Function, NRF, is a NF within the Fifth Generation Core, 5GC, SBA Framework that provides support to service producers to register their services, so that service consumers can dynamically discover them. The service discovery function enabled by NRF provides the address of the NF instances that exist in a network for providing a service and all necessary information to issue and route requests towards the selected target NF producer, i.e. scheme, port, Fully Qualified Domain Name, FQDN, and/or Internet Protocol, IP, address of target NF instance amongst other parameters required to create a Uniform Resource Identifier, URI, used in the Hyper-Text Transfer Protocol, HTTP, request.

3GPP TS 23.502, clause 4.15.3.2.4 'Exposure with bulk subscription' describes how the NEF may perform bulk subscription with the NFs that provide the necessary services.

Network exposure with bulk subscription is defined in 23.502, as a generic procedure for any NF. However, there is no specific service defined for the PCF to support subscription and reporting of monitoring events for event exposure using Network Exposure Function, NEF, in clause 4.15.3.2.4 of 3GPP TS 23.502.

3GPP TS 23.502, clause 5.2.5.3.6 `Npcf PolicyAuthorization_ Subscribe service operation' requires that the target of PCF event reporting may be "an Internal Group Identifier or an indication that any UE is targeted for a specific Data Network Name, DNN, Single Network Slice Selection Information, S-NSSAI", which seems to indicate the Npcf PolicyAuthorization_Subscribe supports bulk subscription to events.

3GPP TS 23.502 clause 4.15.1 defines the general framework for subscription to events.

As described in TS 23.502, 4.15.1, The network capability exposure comprises:
- Exposure of network events externally as well as internally towards core network NFs;
- Exposure of provisioning capability towards external functions;
- Exposure of policy and charging capabilities towards external functions;
- Exposure of core network internal capabilities for analytics.

When subscribing to event reporting the NF consumer(s) provide:
- One or multiple Event ID(s). An Event ID identifies the type of event being subscribed to (e.g. Protocol Data Unit, PDU, Session release, UE mobility out of an Area of Interest, etc.)
- Event Filter Information: Provides Event Parameter Types and Event Parameter Value(s) to be matched against, in order to meet the condition for notifying the subscribed Event ID e.g. the Event Parameter Type could be "Area of interest" and Event Parameter Value list could be list of TAs; The Event Filter depends on the Event ID.

The Event Filter Information is provided per Event ID(s) being subscribed to: within a subscription different Event ID(s) may be associated with different Event Filter Information.
- Within a subscription all Event ID(s) are associated with a unique Event Reporting Information.
- The target of event reporting: this may indicate a specific UE or PDU Session, a group of UE(s) or any UE (i.e. all UEs), Within a subscription all Event ID (s) are associated with the same target of event reporting (possibly corresponding to multiple UE or multiple PDU Sessions).
- A Notification Target Address (+ Notification Correlation ID) allowing the Event Receiving NF to correlate notifications received from the Event provider with this subscription. A subscription is associated with a unique Notification Target Address (+ Notification Correlation ID). In the case that the NF consumer subscribes to the NF producer on behalf of other NF, the NF consumer includes the Notification Target Address (+Notification Correlation ID) of other NF for the Event ID which is to be notified to other NF directly, and the Notification Target Address (+Notification Correlation ID) of itself for the Subscription change related event notification. Each Notification Target Address (+ Notification Correlation ID) is associated with related (set of) Event ID(s).

When the subscription is accepted by the Event provider NF, the consumer NF receives from the event provider NF an identifier (Subscription Correlation ID) allowing to further manage (modify, delete) this subscription.

The requirements to support Bulk subscription to events diverge from the requirements to be fulfilled by the Npcf_PolicyAuthorization service:
- Bulk subscription does not require provisioning of service information, session binding and Policy and Charging Control, PCC, which is the corner stone for the Npcf_PolicyAuthorization service as it is currently defined.
- Bulk subscription event exposure requires the storage of subscription information and notification on event matching.
- Bulk event exposure services should not compete with, or endanger the availability of the Npcf_PolicyAuthorization service fulfilling a 5GC e2e procedure to meet the performance and response time targets.

The NFs must define separated N<nf>_EventExposure services to cover different purposes in an efficient manner.

3rd Generation Partnership Project; Technical Specification Group Services and System Aspects; Procedures for the 5G System; Stage 2 (Release 15) discloses a service exposure with a bulk subscription and details on messages for a generic Network Function NF.

### Summary

The invention is defined by a method claim 1 (at a NEF), a corresponding apparatus claim 8 (NEF), a corresponding computer program product claim 16, a method claim 6 (at a PCF), a corresponding apparatus claim 13 (PCF). Preferred embodiments are specified by the dependent claims.

The following table illustrate PCF services that may be provided.

**Table 1: Services provided by the PCF**

| Service Name | Service Operations | Operation Semantics | Example Consumer (s) |
|---|---|---|---|
| Npcf_AMPolicyC ontrol | Create | Request/Response | AMF |
| | Update | Request/Response | AMF |
| | UpdateNotify | Subscribe/Notify | AMF |
| | Delete | Request/Response | AMF |
| Npcf_Policy Authorization | Create | Request/Response | AF, NEF |
| | Update | Request/Response | AF, NEF |
| | Delete | Request/Response | AF, NEF |
| | Notify | Subscribe/Notify | AF, NEF |
| | Subscribe | | AF, NEF |
| | Unsubscribe | | AF, NEF |
| Npcf_SMPolicyC ontrol | Create | Request/Response | SMF |
| | UpdateNotify | Subscribe/Notify | SMF |
| | Update | Request/Response | SMF |
| | Delete | Request/Response | SMF |
| Npcf_BDTPolicy Control | Create | Request/Response | NEF |
| | Update | Request/Response | NEF |
| Npcf_UEPolicyC ontrol | Create | Request/Response | AMF, V-PCF |
| | Update | Request/Response | AMF, V-PCF |
| | UpdateNotify | Subscribe/Notify | V-PCF |
| | Delete | Request/Response | AMF, V-PCF |
| Npcf_EventExpo sure | Subscribe | Subscribe/Notify | NEF |
| | Unsubscribe | | |
| | Notify | | |

Here below, an example of the details of some of the above identified services are provided.

### Npcf PolicyAuthorization Subscribe

Description: provided by the PCF for NF consumers to explicitly subscribe the notification of events, such as change of Access Type or Radio Access Technology, RAT, type, changes of the Public Land Mobile Network, PLMN, identifier.
Inputs: (Set of) Event ID(s) as specified in Npcf PolicyAuthorization_Notify service operation, target of PCF event reporting (defined below), NF ID, Event Reporting Information defined in Table 4.15.1-1, Notification Target Address (+ Notification Correlation ID).
The target of PCF event reporting the subscription for an individual AF session: A UE IP address (IPv4 address or IPv6 prefix) optionally together with a (DNN, S-NSSAI) or with a UE ID (SUPI or GPSI).
Inputs, Optional: Event Filter, Subscription Correlation ID (in case of modification of the event subscription).
Outputs: When the subscription is accepted: Subscription Correlation ID.
Outputs, Optional: None.

### Npcf EventExposure service

Service description: This service enables an NF to subscribe and get notified about PCF monitoring events for event exposure using NEF (according to clause 4.15.3.2.4). The following events may be subscribed by a NF consumer:
- Flow Status Change: This event is sent when service data flows (including default) are added or removed for one UE, a group of UE(s) or all UEs.
- AM Status Change: This event is sent when AM policy association is added or removed for one UE, a group of UE(s) or all UEs.
- Quota Status Change: This event reports interactions between PCF and Charging Function, CHF, for one UE, a group of UE(s) or all UEs.
- UE Policy Change: This event is sent when UE policy context is added or removed for one UE, a group of UE(s) or all UEs.

Event Filters may be used to specify the conditions to match for notifying the event (i.e. "List of Parameter values to match"). If there are no conditions to match for a specific Event ID, then the Event Filter is not provided. The following table provides as an example how the conditions to match for event reporting can be specified for various Event IDs for PCF exposure.

**Table 2: Event filters**

| Event ID | Event Filter (List of Parameter Values to Match) |
|---|---|
| AM Status Change | <Parameter Type = Subscriber categories, Value = Category1> |
| Flow Status Change | <Parameter Type= Multimedia Priority Serve, MPS, priority, Value=Yes> |

The following service operations are defined for the Npcf_EventExposure service:
- Npcf_EventExposure_Subscribe.
- Npcf EventExposure_UnSubscribe.
- Npcf_EventExposure_Notify

### Npcf EventExposure Subscribe

Description: The consumer NF uses this service operation to subscribe to or modify event reporting for one UE, a group of UE(s) or all UEs.
NF Consumers: NEF.
Inputs (required): NF ID, target of the subscription (GPSI, External Group Identifier or indication that any UE is targeted), (set of) Event ID(s) defined in clause 5.2.5.x.1, Notification Target Address (+ Notification Correlation ID) and Event Reporting Information defined in Table 4.15.1-1.
Inputs (optional): Event Filter (s) associated with each Event ID; Event Filter (s) as defined in clause 5.2.5.x.1.
Outputs (required): Operation execution result indication. When the subscription is accepted: Subscription Correlation ID.
Outputs (optional): First corresponding event report is included, if corresponding information is available (see clause 4.15.1).

The NF consumer subscribes to the event notification by invoking Namf_EventExposure to the PCF. The PCF allocates a Subscription Correlation ID for the subscription and responds to the consumer NF with the Subscription Correlation ID. Event receiving NF ID identifies the NF that shall receive the event reporting.

### Npcf EventExposure Unsubscribe

Description: The NF consumer uses this service operation to unsubscribe for a specific event for one UE, a group of UE(s) or all UEs.
Inputs (required): Subscription Correlation ID.
Input, Optional: None.
Outputs (required): Operation execution result indication.
Output, Optional: None.

### Npcf EventExposure Notify

Description: This service operation reports the event to the consumer that has previously subscribed.
Inputs (required): Event ID, corresponding UE ID (GPSI), Notification Correlation Information, time stamp
Inputs (optional): None.
Outputs (required): None.

These and other aspects of the present disclosure will be apparent from and elucidated with reference to the embodiment(s) described hereinafter.

### Brief description of the drawings

Fig. 1 schematically illustrates part of a reference architecture of a Fifth Generation, 5G, Service Based Architecture, SBA, telecommunication network according to the prior art.
Fig. 2 schematically illustrates a method of Network Function, NF, registration notification and exposure with bulk subscription according to the prior art.
Fig. 3 schematically illustrates a method of Policy Control Function, PCF, event exposure according to the present disclosure.
Fig. 4 schematically illustrates a method according to the present disclosure.
Fig. 5 schematically illustrates a Network Exposure Function, NEF, according to the present disclosure.
Fig. 6 schematically illustrates a method according to the present disclosure.
Fig. 7 schematically illustrates a Policy Control Function, PCF, according to the present disclosure.

### Detailed description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

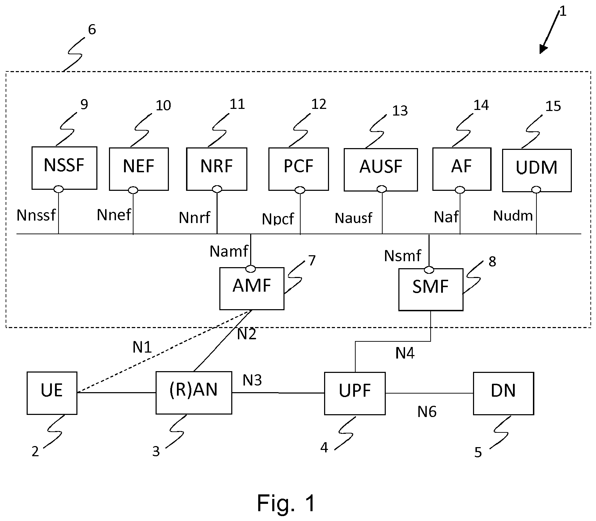

Fig. 1 schematically illustrates part of a reference architecture 1 of a Fifth Generation, 5G, Service Based Architecture, SBA, telecommunication network according to the prior art. The 5G system architecture comprises the following Network Functions, NFs in the core network 6:
- Network Slice Selection Function, NSSF, 9
- Network Exposure Function, NEF, 10
- Network Repository Function, NRF, 11
- Policy Control Function, PCF, 12
- Authentication Server Function, AUSF, 13
- Application Function, AF, 14
- Unified Data Management, UDM, 15
- Access and Mobility Management Function, AMF, 7
- Session Management Function, SMF, 8

The 5G system architecture may further comprise a User Equipment, UE, 2, a Radio Access network, RAN, 3, a User Plane Function, UPF, 4 and a Data Network, DN, 5. A functional description of these network functions is specified in clause 6 of the Third Generation Partnership Project, 3GPP, standard 23.501, "System Architecture for the 5G system", the contents of which are included herein, by reference.

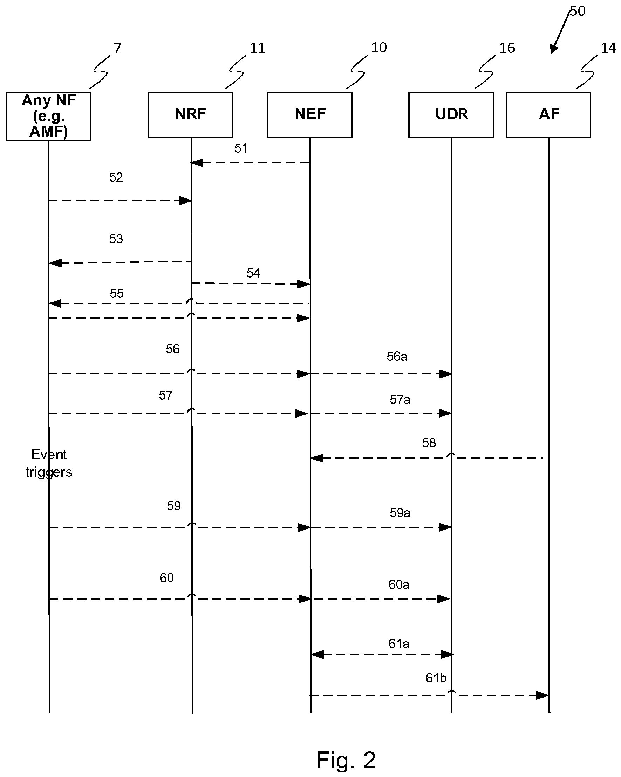

Fig. 2 schematically illustrates a method, 50, of Network Function, NF, registration notification and exposure with bulk subscription according to the prior art. In the method 50 illustrated in figure 2, the network function that requests bulk subscriptions is assumed to be the AMF. It may be noted that the same method may also be performed for any other network function apart from the PCF, for reasons identified earlier in the present disclosure.

In step 51, NEF 10 registers with the NRF 11 for any newly registered NF along with its NF services. At a later instance, when an NF 7 instantiates, it registers 52 itself along with the supported NF services with the NRF 11. Subsequently, the NRF 11 acknowledges 53 the registration.

The NRF 11 notifies 54 the NEF 10 with the newly registered NF along with the supported NF services. Subsequently, the NEF 10 evaluates the NF 7 and NF services supported against the pre-configured events within NEF 10. Based on the evaluation, the NEF 10 subscribes 55 with the corresponding NF 7 either for a single UE, group of UEs, for example identifying a certain type of UEs such as Internet of Things, loT, UEs, or for any UE in the telecommunication network. The NF 7 acknowledges the subscription with the NEF 10.

When an event trigger happens, the NF 7 notifies 56 the requested information towards the subscribing NEF 10 along with a time stamp indicating the time at which the event trigger occurred. The NEF 10 may additionally store 56a the information in the UDR 16 along with the time stamp using either Nudr_DM_Create or Nudr_DM_Update service operation as appropriate. Steps 57, 57a are respectively similar to 56, 56a indicating that these steps may be repeated for any further event triggers that happen.

An application, through the AF 14, registers 58 with the NEF 10 for a certain event identified by event filters. If the registration for the event is authorized by the NEF 10, the NEF 10 records the association of the event and the requester identity. When the event trigger happens, the NF 7 notifies 59 the requested information towards the subscribing NEF 10. The NEF 10 may store 59a the information in the UDR 16 using either Nudr_DM_Create or Nudr_DM_Update service operation as appropriate. Steps 60, 60a are respectively similar to 59, 59a indicating that these steps may be repeated for any further event triggers that happen.

Eventually, the NEF 10 reads 61a from UDR 16 with Nudr_DM_Query, and notifies 61b the application along with the time stamp for the corresponding subscribed events.

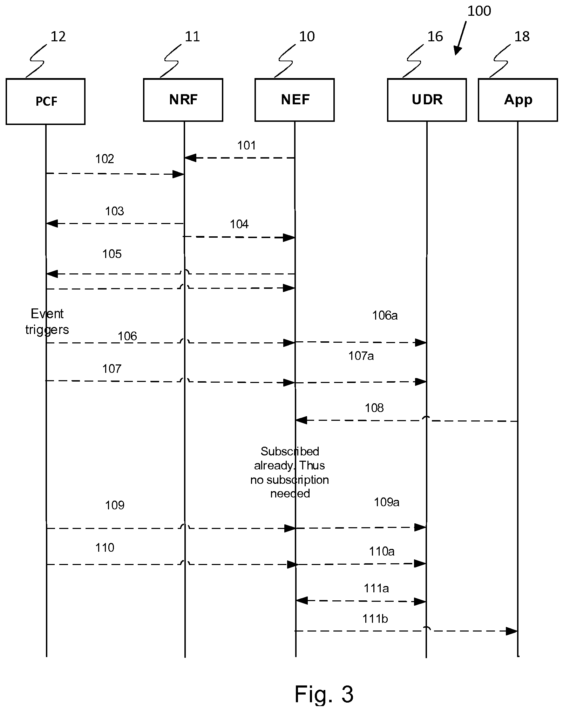

Fig. 3 schematically illustrates a method 100 of Policy Control Function, PCF, event exposure according to the present disclosure. The NEF 10 registers 101 with the NRF 11 for any newly registered NF along with its NF services. When a PCF 12 instantiates, it registers 102 itself along with the supported PCF services with the NRF 11. When the PCF 12 supports the Npcf_Service for event exposure and bulk subscription, the PCF 12 includes in the NF Profile, the list of events it supports. In step 103, the NRF 11 acknowledges the registration.

Subsequently, the NRF 11 notifies 104 the NEF 10 with the newly registered NF along with the supported NF services. The NEF 10 evaluates the PCF 12 and the PCF events supported against the pre-configured events within NEF 10. Based on the evaluation, the NEF 10 subscribes 105 with the corresponding PCF 12 either for a single UE, group of UE(s), for example, identifying a certain type of UEs such as loT UEs, and/or all UEs.

The NEF shall include in the request:
- The list of subscribed event identifiers
- The target of the subscription (GPSI, External Group Identifier or indication that any UE is targeted)
- The Notification Target Address (+ Notification Correlation ID) and Event Reporting Information. Additionally, the request may also comprise of:
- Event Filter (s) associated with each Event ID
In a further step, the PCF 12 acknowledges the subscription with the NEF 10.

When an event trigger happens, for example a flow status changes, according to the filtering criteria, the PCF 12 notifies 106 the requested information towards the NEF 10 along with the time stamp.

The PCF shall include in the request 106:
- Event ID
- Corresponding UE ID (GPSI)
- Notification Correlation Information
Additionally, the PCF may include in the request:
- Event specific parameters.
The NEF 10 may store 106a the information in the UDR 16 along with the time stamp. Steps 107, 107a are respectively similar to 106, 106a indicating that these steps may be repeated for any further event triggers that happen.

The Application 18 registers 108 with the NEF 10 for a certain event identified by event filters. If the registration for the event is authorized by the NEF 10, the NEF 10 records the association of the event and the requester identity.

When the event trigger happen, for example a change of Quality of Service, QoS, the PCF 12 notifies 109 the requested information towards NEF 10. The NEF 10 may store 109a the information in the UDR 16. Steps 110, 110a are respectively similar to 109, 109a indicating that these steps may be repeated for any further event triggers that happen.

The NEF 10 reads 111a from UDR 16 and notifies 111b the application 18 along with the time stamp for the corresponding subscribed events.

For example, the following events can be subscribed by the NEF:
- SM Policy Status Change: This event is sent when SM policy association is added, modified or removed for one UE, a group of UE(s) or all UEs
- Protocol Data Unit, PDU, Session QoS Change: This event is sent when the PCF modifies the PDU session QoS parameters for one UE, a group of UE(s) or all UEs.
- Flow Status Change: This event is sent when service data flows (including default) are added, modified or removed for one UE, a group of UE(s) or all UEs.
- Accumulated Usage Limit Surpassed: This event is sent when one of the usage limits of a subscriber is surpassed.
- Accumulated Usage Reset: This event is sent when one of the usage limits of a subscriber is reset. This can be because the expiration for post-paid subscriptions is reached or due to changes in the subscription profile such as modification of the data-plan.
- AM Policy Status Change: This event is sent when AM policy association is added, modified or removed for one UE, a group of UE(s) or all UEs.
- Quota Status Change: This event reports interactions between PCF and Charging Function, CHF, for one UE, a group of UE(s) or all UEs.
- UE Policy Change: This event is sent when UE policy context is added or removed for one UE, a group of UE(s) or all UEs.
- Policy Authorization Change: This event is sent when an AF request to create policies is created, modified or removed for one UE, a group of UE(s) or all UEs.

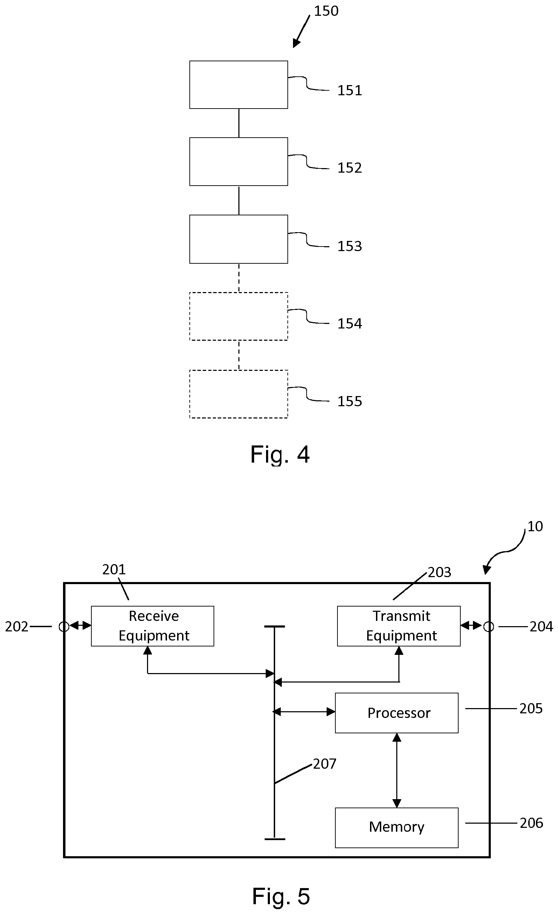

Fig. 4 schematically illustrates a method 150 according to the present disclosure. A method for supporting a service of subscription and reporting of monitoring of events, by a PCF in a telecommunication network. The method 150 comprises the steps of receiving 151, by an NEF, a notification from an NRF, the notification comprising an indication of a registered PCF in said telecommunication network and comprising a list of services supported by said PCF.

In a subsequent step of transmitting 152, the NEF transmits a service subscribe request, to the PCF, for subscribing to said service of reporting of monitoring of events, wherein said request comprises subscription information comprises:
- identification of one or more events;
- identification of one or more User Equipment, UE's;

In a further step of receiving 153, the NEF receives from the PCF a service subscribe acknowledgement for indicating that said NEF is subscribed to said service with said subscription information. The method 150 may further comprise a step of receiving 154, by said NEF, a service notify message for notifying said NEF, wherein said service notify message comprises:
- identification of any of said one or more events;
- identification of any of said one or more UE's.

Additionally the method 150 may also comprise a step of storing 155, by said NEF, said identifications in said service notify message in a Unified Data Register, UDR.

Fig. 5 schematically illustrates a Network Exposure Function, NEF, 10 according to the present disclosure. The NEF 10 is arranged for supporting a service of subscription and reporting of monitoring of events in a telecommunication network, and comprises receive equipment 201, 202 arranged for receiving a notification from an NRF wherein the notification comprises an indication of a registered PCF in the telecommunication network and comprising a list of services supported by said PCF.

The NEF further comprises transmit equipment 203, 204 arranged for transmitting, to said PCF, a service subscribe request for subscribing to said service of reporting of monitoring of events, wherein said request comprises subscription information comprising:
- identification of one or more events;
- identification of one or more User Equipment, UE's;

The receive equipment 201, 202 is further arranged for receiving, from said PCF, a service subscribe acknowledgement for indicating that said NEF is subscribed to said service with said subscription information.

The receive equipment 201, 202 may further be arranged for receiving a service notify message for notifying said NEF, wherein said service notify message comprises:
- Identification of any of said one or more events;
- Identification of any of said one or more UE's.

The NEF 10 may further comprise store equipment 206 arranged for storing said identifications in said service notify message in a Unified Data Register, UDR. The figure illustrates the store equipment as part of an internal memory 206. The skilled person understands that the store equipment may be a separate entity that instruct the UDR to store the relevant information. The memory 206 may further be arranged for storing computer readable instructions which when executed by the processor 205 cause the NEF 10 to perform a method according to the present disclosure. The internal components communicate with one another via an internal bus 207.

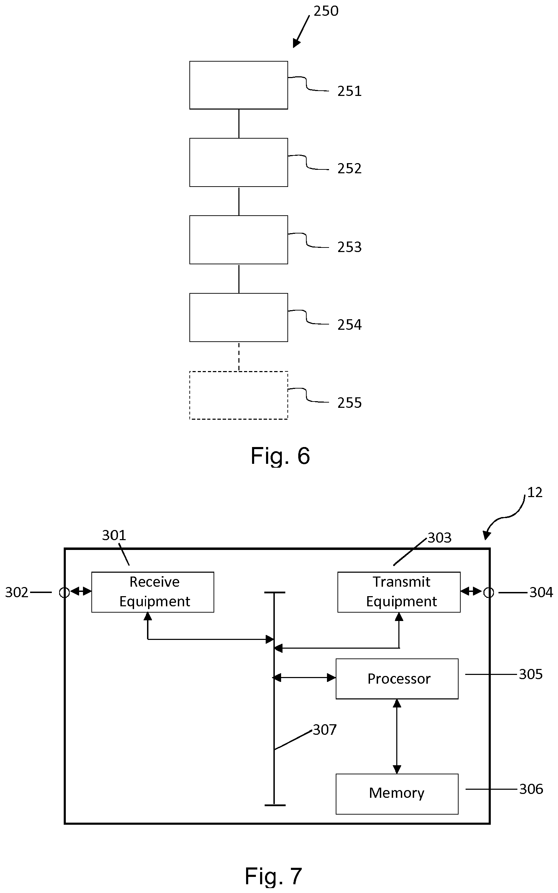

Fig. 6 schematically illustrates a method 250 according to the present disclosure. The method 250 is a method of providing a service of subscription and reporting of monitoring of events, by a Policy Control Function, PCF, in a telecommunication network. The method 250 comprises the steps of transmitting 251, by said PCF, to a Network Repository Function, NRF, a registration message for registering said PCF with said service in said NRF, wherein said request comprises one or more events it supports with said service, receiving 252, by said PCF, from said NRF, a registration acknowledgement message.

In a subsequent step of receiving 253 the PCF receives a service subscribe request for subscribing a Network Exposure Function, NEF, to said service of reporting of monitoring of events, wherein said request comprises subscription information comprising:
- identification of one or more events;
- identification of one or more User Equipment, UE's;

In the step of transmitting 254 the PCF transmits to the NRF, a service subscribe acknowledgement for indicating that said NEF is subscribed to said service with said subscription information.

The method 250 may also comprise a step of transmitting 255, by said PCF, to said NEF, a service notify message for notifying said NEF, wherein said service notify message comprises:
- identification of any of said one or more events;
- identification of any of said one or more UE's.

Fig. 7 schematically illustrates a Policy Control Function, PCF, 12 according to the present disclosure. The PCF 12 is arranged for providing a service of subscription and reporting of monitoring of events in a telecommunication network, and comprises transmit equipment 303, 304 arranged for transmitting, to an NRF, a registration message for registering said PCF 12 with said service in said NRF, wherein said request comprises one or more events it supports with said service.

The PCF 12 also comprises receive equipment 301, 302 arranged for receiving, from said NRF, a registration acknowledgement message, and for receiving, a service subscribe request for subscribing a Network Exposure Function, NEF, to said service of reporting of monitoring of events, wherein said request comprises subscription information comprising:
- identification of one or more events;
- identification of one or more User Equipment, UE's.

The transmit equipment 303, 304 is further arranged for transmitting, to said NRF, a service subscribe acknowledgement for indicating that said NEF is subscribed to said service with said subscription information.

Additionally, the transmit equipment 303, 304 may further be arranged for transmitting to said NEF, a service notify message for notifying said NEF, wherein said service notify message comprises:
- identification of any of said one or more events;
- identification of any of said one or more UE's.

The PCF 12 may further comprise memory 306 that is arranged for storing computer readable instructions which when executed by the processor 305 cause the PCF 12 to perform a method according to the present disclosure. The internal components communicate with one another via an internal bus 307.

It shall be understood that a preferred embodiment of the present disclosure can also be any combination of the dependent claims or above embodiments with the respective independent claim.

Other variations to the disclosed examples can be understood and effected by those skilled in the art of practicing the claimed disclosure, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependant claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope thereof.

The present disclosure is not limited to the examples as disclosed above. The invention is defined by the appended claims.

## Claims

1. A method (150) for supporting a service of subscription and reporting of monitoring of events, by a Policy Control Function, PCF, in a telecommunication network, said method comprising the steps of:
- receiving (151), by a Network Exposure Function, NEF, a notification from a Network Repository Function, NRF, said notification comprising an indication of a registered PCF in said telecommunication network and comprising a list of services supported by said PCF;
- transmitting (152), by said NEF, to said PCF, a service subscribe request, being an Npcf PolicyAuthorization_Subscribe service, for subscribing to said service of reporting of monitoring of events, wherein said request comprises subscription information comprising:
- identification of one or more events, being a:
- change of Access Type or Radio Access Technology, RAT, type, and
- identification of one or more User Equipment, UE's;
- receiving (153), by said NEF, from said PCF, a service subscribe acknowledgement for indicating that said NEF is subscribed to said service with said subscription information.

2. A method in accordance with claim 1, wherein said method further comprises the step of:
- receiving, by said NEF, a service notify message for notifying said NEF, wherein said service notify message comprises:
- identification of any of said one or more events;
- identification of any of said one or more UE's.

3. A method in accordance with claim 2, wherein said method further comprises the step of:
- storing (155), by said NEF, said identifications in said service notify message in a Unified Data Register, UDR.

4. A method in accordance with any of claims 2-3, wherein said service notify message further comprises:
- Event specific parameters.

5. A method in accordance with any of the previous claims, wherein said subscription information further comprises:
- a Notification Target Address and Event Reporting Information.

6. A method (250) of providing a service of subscription and reporting of monitoring of events, by a Policy Control Function, PCF, in a telecommunication network, said method comprising the steps of:
- transmitting (251), by said PCF, to a Network Repository Function, NRF, a registration message for registering said PCF with said service in said NRF, wherein said registration message comprises one or more events it supports with said service being a change of Access Type or Radio Access Technology, RAT, type;
- receiving (252), by said PCF, from said NRF, a registration acknowledgement message;
- receiving (253), by said PCF, a service subscribe request, being an Npcf_PolicyAuthorization_Subscribe service, for subscribing a Network Exposure Function, NEF, to said service of reporting of monitoring of events, wherein said request comprises subscription information comprising:
- identification of one or more events, being a:
- change of Access Type or Radio Access Technology, RAT, type, and
- identification of one or more User Equipment, UE's;
- transmitting (254), by said PCF, to said NEF, a service subscribe acknowledgement for indicating that said NEF is subscribed to said service with said subscription information.

7. A method in accordance with claim 6, wherein said method further comprises the step of:
- transmitting (255), by said PCF, to said NEF, a service notify message for notifying said NEF, wherein said service notify message comprises:
- identification of any of said one or more events, , being any of:
- change of Access Type or Radio Access Technology, RAT, type, and
- change of the Public Land Mobile Network, PLMN, identifier;
- identification of any of said one or more UE's.

8. A Network Exposure Function, NEF, (10) arranged for supporting a service of subscription and reporting of monitoring of events in a telecommunication network, wherein said NEF comprises:
- receive equipment (201, 202) arranged for receiving a notification from a Network Repository Function, NRF, said notification comprising an indication of a registered PCF in said telecommunication network and comprising a list of services supported by said PCF;
- transmit equipment (203, 204) arranged for transmitting, to said PCF, a service subscribe request, being an Npcf PolicyAuthorization_Subscribe service, for subscribing to said service of reporting of monitoring of events, wherein said request comprises subscription information comprising:
- identification of one or more events, being a:
- change of Access Type or Radio Access Technology, RAT, type, and
- identification of one or more User Equipment, UE's;
wherein said receive equipment is further arranged for receiving, from said PCF, a service subscribe acknowledgement for indicating that said NEF is subscribed to said service with said subscription information.

9. An NEF in accordance with claim 8, wherein said receive equipment is further arranged for:
- receiving a service notify message for notifying said NEF, wherein said service notify message comprises:
- identification of any of said one or more events, being any of:
- change of Access Type or Radio Access Technology, RAT, type, and
- change of the Public Land Mobile Network, PLMN, identifier;
- identification of any of said one or more UE's.

10. An NEF in accordance with claim 9, wherein said service notify message further comprises:
- Event specific parameters.

11. An NEF in accordance with any of the claims 8 - 10, wherein said NEF further comprises:
- store equipment (206) arranged for storing said identifications in said service notify message in a Unified Data Register, UDR.

12. An NEF in accordance with any of the claims 8 - 11, wherein said subscription information further comprises:
- a Notification Target Address and Event Reporting Information.

13. A Policy Control Function, PCF, (12) arranged for providing a service of subscription and reporting of monitoring of events in a telecommunication network, wherein said PCF comprises:
- transmit equipment (303, 304) arranged for transmitting, to a Network Repository Function, NRF, a registration message for registering said PCF with said service in said NRF, wherein said request comprises one or more events it supports with said service, being a change of Access Type or Radio Access Technology, RAT, type;
- receive equipment (301, 302) arranged for receiving, from said NRF, a registration acknowledgement message, and for receiving, a service subscribe request, being an Npcf_PolicyAuthorization_Subscribe service, for subscribing a Network Exposure Function, NEF, to said service of reporting of monitoring of events, wherein said request comprises subscription information comprising:
- identification of one or more events, being a
- change of Access Type or Radio Access Technology, RAT, type, and
- identification of one or more User Equipment, UE's;
wherein said transmit equipment is further arranged for transmitting, to said NRF, a service subscribe acknowledgement for indicating that said NEF is subscribed to said service with said subscription information.

14. A PCF in accordance with claim 13, wherein said transmit equipment is further arranged for:
- transmitting, by said PCF, to said NEF, a service notify message for notifying said NEF, wherein said service notify message comprises:
- identification of any of said one or more events, being a:
- change of Access Type or Radio Access Technology, RAT, type, and
- identification of any of said one or more UE's.

15. A telecommunication network comprising:
- a Network Exposure Function, NEF, according to any of the claims 8-12;
- a Policy Control Function, PCF, according to any of the claims 13-14.

16. A computer program product comprising a computer readable medium having instructions stored thereon, which instructions cause Network Function in a telecommunication network to implement a method in accordance with any of the claims 1-7.

## Patentansprüche

1. Verfahren (150) zur Unterstützung eines Dienstes zum Abonnieren und Melden von Ereignisüberwachung durch eine Richtlinienkontrollfunktion, PCF, in einem Telekommunikationsnetzwerk, wobei das Verfahren die folgenden Schritte umfasst:
- Empfangen (151) einer Benachrichtigung durch eine Netzwerkdarlegungsfunktion, NEF, von einer Netzwerk-Repository-Funktion, NRF, wobei die Benachrichtigung eine Anzeige einer registrierten PCF im Telekommunikationsnetzwerk umfasst und eine Liste von Diensten umfasst, die von der PCF unterstützt werden;
- Senden (152) einer Dienstabonnementanforderung durch die NEF an die PCF, wobei es sich um einen Npcf_PolicyAuthorization_Subscribe-Dienst handelt, zum Abonnieren des Dienstes zum Melden von Ereignisüberwachung, wobei die Anforderung Abonnementinformationen umfasst, die Folgendes umfassen:
- eine Identifikation eines oder mehrerer Ereignisse, wobei es sich um Folgendes handelt:
- eine Änderung eines Zugangstyps oder eines Funkzugangstechnologietyps, RAT-Typs, und
- eine Identifikation einer oder mehrerer Benutzereinrichtungen, UEs;
- Empfangen (153) einer Dienstabonnementbestätigung durch die NEF von der PCF, um anzuzeigen, dass die NEF den Dienst mit den Abonnementinformationen abonniert hat.

2. Verfahren nach Anspruch 1, wobei das Verfahren ferner den folgenden Schritt umfasst:
- Empfangen einer Dienstbenachrichtigungsnachricht durch die NEF zum Benachrichtigen der NEF, wobei die Dienstbenachrichtigungsnachricht umfasst:
- eine Identifikation eines des einen oder der mehreren Ereignisse;
- eine Identifikation einer der einen oder der mehreren UEs.

3. Verfahren nach Anspruch 2, wobei das Verfahren ferner den folgenden Schritt umfasst:
- Speichern (155) der Identifikationen in der Dienstbenachrichtigungsnachricht durch die NEF in einem einheitlichen Datenregister, UDR.

4. Verfahren nach einem der Ansprüche 2 bis 3, wobei die Dienstbenachrichtigungsnachricht ferner umfasst:
- ereignisspezifische Parameter.

5. Verfahren nach einem der vorhergehenden Ansprüche, wobei die Abonnementinformationen ferner umfassen:
- eine Benachrichtigungszieladresse und Ereignismeldungsinformationen.

6. Verfahren (250) zur Bereitstellung eines Dienstes zum Abonnieren und Melden von Ereignisüberwachung durch eine Richtlinienkontrollfunktion, PCF, in einem Telekommunikationsnetzwerk, wobei das Verfahren die folgenden Schritte umfasst:
- Senden (251) einer Registrierungsnachricht durch die PCF an eine Netzwerk-Repository-Funktion, NRF, zum Registrieren der PCF mit dem Dienst im NRF, wobei die Registrierungsnachricht ein oder mehrere von ihr mit dem Dienst unterstützte Ereignisse umfasst, wobei es sich um eine Änderung eines Zugangstyps oder eines Funkzugangstechnologietyps, RAT-Typs, handelt;
- Empfangen (252) einer Registrierungsbestätigungsnachricht durch die PCF von der NRF;
- Empfangen (253) einer Dienstabonnementanforderung, wobei es sich um einen Npcf_PolicyAuthorization_Subscribe-Dienst handelt, durch die PCF zum Abonnieren des Dienstes zum Melden von Ereignisüberwachung für eine Netzwerkdarlegungsfunktion, NEF, wobei die Anforderung Abonnementinformationen umfasst, die Folgendes umfassen:
- eine Identifikation eines oder mehrerer Ereignisse, wobei es sich um Folgendes handelt:
- eine Änderung eines Zugangstyps oder eines Funkzugangstechnologietyps, RAT-Typs, und
- eine Identifikation einer oder mehrerer Benutzereinrichtungen, UEs;
- Senden (254) einer Dienstabonnementbestätigung durch die PCF an die NEF, um anzuzeigen, dass die NEF den Dienst mit den Abonnementinformationen abonniert hat.

7. Verfahren nach Anspruch 6, wobei das Verfahren ferner den folgenden Schritt umfasst:
- Senden (255) einer Dienstbenachrichtigungsnachricht durch die PCF zum Benachrichtigen der NEF an die NEF, wobei die Dienstbenachrichtigungsnachricht umfasst:
- eine Identifikation eines des einen oder der mehreren Ereignisse, wobei es sich um eines von Folgendem handelt:
- eine Änderung eines Zugangstyps oder eines Funkzugangstechnologietyps, RAT-Typs, und
- eine Änderung der Kennung des öffentliches Landfunknetzwerks, PLMN;
- eine Identifikation einer der einen oder der mehreren UEs.

8. Netzwerkdarlegungsfunktion, NEF, (10), die zum Unterstützen eines Dienstes zum Abonnieren und Melden von Ereignisüberwachung in einem Telekommunikationsnetzwerk ausgelegt ist, wobei die NEF umfasst:
- eine Empfangseinrichtung (201, 202), die zum Empfangen einer Benachrichtigung von einer Netzwerk-Repository-Funktion, NRF, ausgelegt ist, wobei die Benachrichtigung eine Anzeige einer registrierten PCF im Telekommunikationsnetzwerk umfasst und eine Liste von Diensten umfasst, die von der PCF unterstützt werden;
- eine Sendeeinrichtung (203, 204), die so ausgelegt ist, dass sie eine Dienstabonnementanforderung, wobei es sich um einen Npcf_PolicyAuthorization_Subscribe-Dienst handelt, zum Abonnieren des Dienstes zum Melden von Ereignisüberwachung an die PCF sendet, wobei die Anforderung Abonnementinformationen umfasst, die Folgendes umfassen:
- eine Identifikation eines oder mehrerer Ereignisse, wobei es sich um Folgendes handelt:
- eine Änderung eines Zugangstyps oder eines Funkzugangstechnologietyps, RAT-Typs, und
- eine Identifikation einer oder mehrerer Benutzereinrichtungen, UEs;
wobei die Empfangseinrichtung ferner so ausgelegt ist, dass sie eine Dienstabonnementbestätigung von der PCF empfängt, um anzuzeigen, dass die NEF den Dienst mit den Abonnementinformationen abonniert hat.

9. NEF nach Anspruch 8, wobei die Empfangseinrichtung ferner ausgelegt ist zum:
- Empfangen einer Dienstbenachrichtigungsnachricht zum Benachrichtigen der NEF, wobei die Dienstbenachrichtigungsnachricht umfasst:
- eine Identifikation eines des einen oder der mehreren Ereignisse, wobei es sich um eines von Folgendem handelt:
- eine Änderung eines Zugangstyps oder eines Funkzugangstechnologietyps, RAT-Typs, und
- eine Änderung der Kennung des öffentliches Landfunknetzwerks, PLMN;
- eine Identifikation einer der einen oder der mehreren UEs.

10. NEF nach Anspruch 9, wobei die Dienstbenachrichtigungsnachricht ferner umfasst:
- ereignisspezifische Parameter.

11. NEF nach einem der Ansprüche 8 bis 10, wobei die NEF ferner umfasst:
- eine Speichereinrichtung (206), die zum Speichern der Identifikationen in der Dienstbenachrichtigungsnachricht in einem einheitlichen Datenregister, UDR, ausgelegt ist.

12. NEF nach einem der Ansprüche 8 bis 11, wobei die Abonnementinformationen ferner umfassen:
- eine Benachrichtigungszieladresse und Ereignismeldungsinformationen.

13. Richtlinienkontrollfunktion, PCF, (12), die zum Bereitstellen eines Dienstes zum Abonnieren und Melden von Ereignisüberwachung in einem Telekommunikationsnetzwerk ausgelegt ist, wobei die PCF umfasst:
- eine Sendeeinrichtung (303, 304) die so ausgelegt ist, dass sie eine Registrierungsnachricht zum Registrieren der PCF mit dem Dienst in einer Netzwerk-Repository-Funktion, NRF, an die NRF sendet, wobei die Registrierungsnachricht ein oder mehrere von ihr mit dem Dienst unterstützte Ereignisse umfasst, wobei es sich um eine Änderung eines Zugangstyps oder eines Funkzugangstechnologietyps, RAT-Typs, handelt;
- eine Empfangseinrichtung (301, 302), die so ausgelegt ist, dass sie eine Dienstabonnementanforderung, wobei es sich um einen Npcf_PolicyAuthorization_Subscribe-Dienst handelt, zum Abonnieren des Dienstes zum Melden von Ereignisüberwachung für eine Netzwerkdarlegungsfunktion, NEF, empfängt, wobei die Anforderung Abonnementinformationen umfasst, die Folgendes umfassen:
- eine Identifikation eines oder mehrerer Ereignisse, wobei es sich um Folgendes handelt:
- eine Änderung eines Zugangstyps oder eines Funkzugangstechnologietyps, RAT-Typs, und
- eine Identifikation einer oder mehrere Benutzereinrichtungen, UEs;
wobei die Sendeeinrichtung ferner so ausgelegt ist, dass sie eine Dienstabonnementbestätigung an die NRF sendet, um anzuzeigen, dass die NEF den Dienst mit den Abonnementinformationen abonniert hat.

14. PCF nach Anspruch 13, wobei die Sendeeinrichtung ferner ausgelegt ist zum:
- Senden einer Dienstbenachrichtigungsnachricht durch die PCF zum Benachrichtigen der NEF an die NEF, wobei die Dienstbenachrichtigungsnachricht umfasst:
- eine Identifikation eines des einen oder der mehreren Ereignisse, wobei es sich um Folgendes handelt:
- eine Änderung eines Zugangstyps oder eines Funkzugangstechnologietyps, RAT-Typs, und
- eine Identifikation einer der einen oder der mehreren UEs.

15. Telekommunikationsnetzwerk, umfassend:
- eine Netzwerkdarlegungsfunktion, NEF, nach einem der Ansprüche 8 bis 12;
- eine Richtlinienkontrollfunktion, PCF, nach einem der Ansprüche 13 bis 14.

16. Computerprogrammprodukt, umfassend ein computerlesbares Medium mit darauf gespeicherten Anweisungen, wobei die Anweisungen eine Netzwerkfunktion in einem Telekommunikationsnetzwerk zum Implementieren eines Verfahren nach einem der Ansprüche 1 bis 7 veranlassen.

## Revendications

1. Procédé (150) de prise en charge d'un service d'abonnement et de rapport de surveillance d'événements, par une fonction de commande de politique, PCF, dans un réseau de télécommunication, ledit procédé comprenant les étapes suivantes :
- la réception (151), par une fonction d'exposition de réseau, NEF, d'une notification depuis une fonction de référentiel de réseau, NRF, ladite notification comprenant une indication d'une PCF enregistrée dans ledit réseau de télécommunication et comprenant une liste de services pris en charge par ladite PCF ;
- la transmission (152), par ladite NEF, à ladite PCF, d'une demande d'abonnement de service, étant un service Npcf_PolicyAuthorization_Subscribe, pour s'abonner audit service de rapport de surveillance d'événements, dans lequel ladite demande comprend des informations d'abonnement comprenant :
- une identification d'un ou plusieurs événements, étant :
- un changement de type d'accès ou de type de technologie d'accès radio, RAT, et
- une identification d'un ou plusieurs équipements utilisateur, UE ;
- la réception (153), par ladite NEF, depuis ladite PCF, d'un accusé de réception d'abonnement de service pour indiquer que ladite NEF est abonnée audit service avec lesdites informations d'abonnement.

2. Procédé selon la revendication 1, dans lequel ledit procédé comprend en outre l'étape suivante :
- la réception, par ladite NEF, d'un message de notification de service pour notifier ladite NEF, dans lequel ledit message de notification de service comprend :
- une identification de l'un quelconque desdits un ou plusieurs événements ;
- une identification de l'un quelconque desdits un ou plusieurs UE.

3. Procédé selon la revendication 2, dans lequel ledit procédé comprend en outre l'étape suivante :
- le stockage (155), par ladite NEF, desdites identifications dans ledit message de notification de service dans un registre de données unifié, UDR.

4. Procédé selon la revendication 2 ou 3, dans lequel ledit message de notification de service comprend en outre :
- des paramètres spécifiques à l'événement.

5. Procédé selon l'une quelconque des revendications précédentes, dans lequel lesdites informations d'abonnement comprennent en outre :
- une adresse de cible de notification et des informations de rapport d'événement.

6. Procédé (250) de fourniture d'un service d'abonnement et de rapport de surveillance d'événements, par une fonction de commande de politique, PCF, dans un réseau de télécommunication, ledit procédé comprenant les étapes suivantes :
- la transmission (251), par ladite PCF, à une fonction de référentiel de réseau, NRF, d'un message d'enregistrement pour enregistrer ladite PCF avec ledit service dans ladite NRF, dans lequel ledit message d'enregistrement comprend un ou plusieurs événements qu'elle prend en charge avec ledit service étant un changement de type d'accès ou de type de technologie d'accès radio, RAT ;
- la réception (252), par ladite PCF, depuis ladite NRF, d'un message d'accusé de réception d'enregistrement ;
- la réception (253), par ladite PCF, d'une demande d'abonnement de service, étant un service Npcf_PolicyAuthorization_Subscribe, pour abonner une fonction d'exposition de réseau, NEF, audit service de rapport de surveillance d'événements, dans lequel ladite demande comprend des informations d'abonnement comprenant :
- une identification d'un ou plusieurs événements, étant :
- un changement de type d'accès ou de type de technologie d'accès radio, RAT, et
- une identification d'un ou plusieurs équipements utilisateur, UE ;
- la transmission (254), par ladite PCF, à ladite NEF, d'un accusé de réception d'abonnement de service pour indiquer que ladite NEF est abonnée audit service avec lesdites informations d'abonnement.

7. Procédé selon la revendication 6, dans lequel ledit procédé comprend en outre l'étape suivante :
- la transmission (255), par ladite PCF, à ladite NEF, d'un message de notification de service pour notifier ladite NEF, dans lequel ledit message de notification de service comprend :
- une identification de l'un quelconque desdits un ou plusieurs événements, étant l'un quelconque parmi :
- un changement de type d'accès ou de type de technologie d'accès radio, RAT, et
- un changement de l'identifiant de réseau mobile terrestre public, PLMN ;
- une identification de l'un quelconque desdits un ou plusieurs UE.

8. Fonction d'exposition de réseau, NEF, (10) agencée pour prendre en charge un service d'abonnement et de rapport de surveillance d'événements dans un réseau de télécommunication, dans laquelle ladite NEF comprend :
- un équipement de réception (201, 202) agencé pour recevoir une notification, depuis une fonction de référentiel de réseau, NRF, ladite notification comprenant une indication d'une PCF enregistrée dans ledit réseau de télécommunication et comprenant une liste de services pris en charge par ladite PCF ;
- un équipement de transmission (203, 204) agencé pour transmettre, à ladite PCF, une demande d'abonnement de service, étant un service Npcf_PolicyAuthorization_Subscribe, pour s'abonner audit service de rapport de surveillance d'événements, dans laquelle ladite demande comprend des informations d'abonnement comprenant :
- une identification d'un ou plusieurs événements, étant :
- un changement de type d'accès ou de type de technologie d'accès radio, RAT, et
- une identification d'un ou plusieurs équipements utilisateur, UE ;
dans laquelle ledit équipement de réception est en outre agencé pour recevoir, depuis ladite PCF, un accusé de réception d'abonnement de service pour indiquer que ladite NEF est abonnée audit service avec lesdites informations d'abonnement.

9. NEF selon la revendication 8, dans laquelle ledit équipement de réception est en outre agencé pour :
- recevoir un message de notification de service pour notifier ladite NEF, dans laquelle ledit message de notification de service comprend :
- une identification de l'un quelconque desdits un ou plusieurs événements, étant l'un quelconque de :
- un changement de type d'accès ou de type de technologie d'accès radio, RAT, et
- un changement de l'identifiant de réseau mobile terrestre public, PLMN ;
- une identification de l'un quelconque desdits un ou plusieurs UE.

10. NEF selon la revendication 9, dans laquelle ledit message de notification de service comprend en outre :
- des paramètres spécifiques à l'événement.

11. NEF selon l'une quelconque des revendications 8 à 10, dans laquelle ladite NEF comprend en outre :
- un équipement de stockage (206) agencé pour stocker lesdites identifications dans ledit message de notification de service dans un registre de données unifié, UDR.

12. NEF selon l'une quelconque des revendications 8 à 11, dans laquelle lesdites informations d'abonnement comprennent en outre :
- une adresse de cible de notification et des informations de rapport d'événement.

13. Fonction de commande de politique, PCF, (12) agencée pour fournir un service d'abonnement et de rapport de surveillance d'événements dans un réseau de télécommunication, dans laquelle ladite PCF comprend :
- un équipement de transmission (303, 304) agencé pour transmettre, à une fonction de référentiel de réseau, NRF, un message d'enregistrement pour enregistrer ladite PCF avec ledit service dans ladite NRF, dans laquelle ladite demande comprend un ou plusieurs événements qu'elle prend en charge avec ledit service étant un changement de type d'accès ou de type de technologie d'accès radio, RAT ;
- un équipement de réception (301, 302) agencé pour recevoir, depuis ladite NRF, un message d'accusé de réception d'enregistrement et pour recevoir une demande d'abonnement de service, étant un service Npcf_PolicyAuthorization_Subscribe, pour abonner une fonction d'exposition de réseau, NEF, audit service de rapport de surveillance d'événements, dans laquelle ladite demande comprend des informations d'abonnement comprenant :
- une identification d'un ou plusieurs événements, étant :
- un changement de type d'accès ou de type de technologie d'accès radio, RAT, et
- une identification d'un ou plusieurs équipements utilisateur, UE ;
dans laquelle ledit équipement de transmission est en outre agencé pour transmettre, à ladite NRF, un accusé de réception d'abonnement de service pour indiquer que ladite NEF est abonnée audit service avec lesdites informations d'abonnement.

14. PCF selon la revendication 13, dans laquelle ledit équipement de transmission est en outre agencé pour :
- transmettre, par ladite PCF, à ladite NEF, un message de notification de service pour notifier ladite NEF, dans laquelle ledit message de notification de service comprend :
- une identification de l'un quelconque desdits un ou plusieurs événements, étant :
- un changement de type d'accès ou de type de technologie d'accès radio, RAT, et
- une identification de l'un quelconque desdits un ou plusieurs UE.

15. Réseau de télécommunications comprenant :
- une fonction d'exposition de réseau, NEF, selon l'une quelconque des revendications 8 à 12 ;
- une fonction de commande de politique, PCF, selon la revendication 13 ou 14.

16. Produit programme informatique comprenant un support lisible par ordinateur sur lequel sont stockées des instructions qui amènent une fonction de réseau dans un réseau de télécommunications à mettre en œuvre un procédé selon l'une quelconque des revendications 1 à 7 .
